# FASCICULE DE BREVET EUROPEEN

(11) **EP 1 150 818 B1**
(45) Date de publication et mention de la délivrance du brevet: **23.04.2003**
(21) Numéro de dépôt: 00902698.0
(22) Date de dépôt: 01.02.2000
(51) Int. Cl.: B29C 31/04, B29C 31/06

(54) **INSTALLATION DE FABRICATION DE PIECES DE STRUCTURE EN MATIERE THERMOPLASTIQUE, NOTAMMENT POUR VEHICULES AUTOMOBILES**
VORRICHTUNG ZUM HERSTELLEN VON STRUKTURTEILEN AUS THERMOPLASTISCHEM KUNSTSTOFF , INSBESONDERE FÜR KRAFTFAHRZEUGE
INSTALLATION FOR PRODUCING STRUCTURAL PARTS MADE OF A THERMOPLASTIC MATERIAL FOR MOTOR VEHICLES

(30) Priorité: 11.02.1999 FR 9901643
(43) Date de publication de la demande: 07.11.2001
(73) Titulaire: Faurecia Industries, 92100 Boulogne (FR)
(72) Inventeur: LETROUBLON, Michel, F-25700 Valentigney (FR); DOMAGATA, Rémi, F-25350 Mandeure (FR); DUMAZET, Philippe, F-25200 Montbeliard (FR)
(74) Mandataire: Habasque, Etienne Joel Jean-François
(86) Numéro de dépôt international: FR0000231
(87) Numéro de publication internationale: WO00047385

(56) Documents cités:
- EP-A- 0 895 845
- DE-A- 3 843 342
- FR-A- 2 734 199

## Description

La présente invention concerne une installation de fabrication de pièces de structure en matière thermoplastique notamment pour véhicules automobiles.

La Demanderesse a déjà décrit dans le document FR-A-2 734 199, une installation de ce type qui comporte des moyens de production en continu d'une pâte de matière thermoplastique, des moyens d'accumulation et de stockage temporaire de pâte produite et des moyens de prélèvement de pâte dans les moyens d'accumulation et de stockage temporaire et d'introduction de cette pâte prélevée dans un moule de formation de pièce, ces moyens de prélèvement comprenant des moyens thermorégulés en forme de seringue comportant au moins un orifice de chargement/déchargement de pâte.

Ces moyens thermorégulés en forme de seringue sont portés par des moyens de manutention et déplaçables entre une première position de chargement de pâte, dans laquelle l'orifice de chargement/déchargement de pâte des moyens en forme de seringue est raccordé à la sortie des moyens d'accumulation et de stockage temporaire de pâte, pour permettre le transfert de la pâte de ces moyens d'accumulation et de stockage temporaire dans ces moyens en forme de seringue et une seconde position d'introduction de la pâte chargée dans ces moyens, dans le moule de formation de pièce.

Une telle installation peut cependant être relativement difficile à mettre en oeuvre lorsque l'on souhaite réaliser une injection à haute pression de la pâte dans le moule.

En effet, il peut alors se poser des problèmes d'accouplement des moyens thermorégulés en forme de seringue, d'une part à la sortie des moyens d'accumulation et de stockage temporaire de pâte et d'autre part, au moule.

Par ailleurs, il est également nécessaire d'associer aux moyens thermorégulés en forme de seringue, des moyens d'actionnement à haute pression, ce qui en augmente le poids et l'encombrement et rend difficile le déplacement de ceux-ci entre les positions de chargement et d'introduction.

Le but de l'invention est donc de résoudre ces problèmes.

A cet effet, l'invention a pour objet une installation de fabrication de pièces de structure en matière thermoplastique notamment pour véhicules automobiles, comportant des moyens de production en continu d'une pâte de matière thermoplastique, des moyens d'accumulation et de stockage temporaire de pâte produite et des moyens de prélèvement de pâte dans les moyens d'accumulation et de stockage temporaire et d'introduction de cette pâte prélevée dans un premier moule de formation de pièces, comprenant des moyens thermorégulés en forme de seringue comportant au moins un orifice de chargement/déchargement de pâte, portés par des moyens de manutention et déplaçables entre une première position de chargement de pâte, dans laquelle l'orifice de chargement/déchargement de pâte des moyens en forme de seringue est raccordé à la sortie des moyens d'accumulation et de stockage temporaire de pâte pour permettre le transfert de la pâte de ces moyens d'accumulation et de stockage temporaire dans les moyens en forme de seringue et une seconde position d'introduction de la pâte chargée dans ces moyens, dans le premier moule, caractérisée en ce que la sortie des moyens d'accumulation et de stockage comporte un distributeur comportant au moins deux sorties et pilotable pour délivrer la pâte à l'une ou l'autre de celles-ci, l'une des sorties étant adaptée pour être accouplée à l'orifice de chargement/déchargement des moyens thermorégulés en forme de seringue et l'autre étant adaptée pour être accouplée de façon permanente à l'orifice de chargement d'un piston d'injection à haute pression de pâte dans un second moule de formation de pièce, dont un orifice de sortie est adapté pour être accouplé de façon permanente à ce second moule.

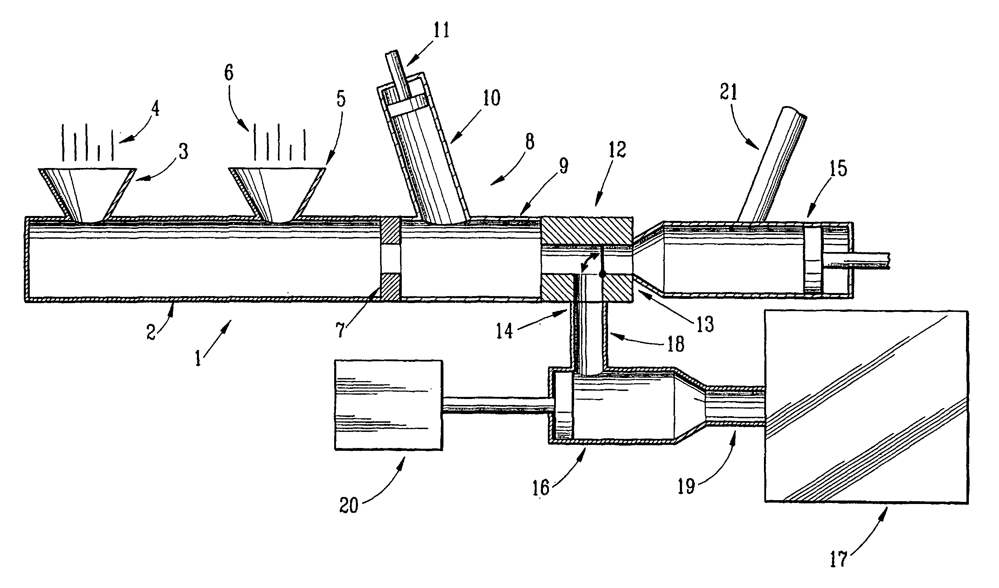

L'invention sera mieux comprise à l'aide de la description qui va suivre, donnée uniquement à titre d'exemple et faite en se référant au dessin annexé qui représente un schéma synoptique illustrant la structure générale d'une installation de fabrication de pièces selon l'invention.

On reconnaît en effet sur cette figure, une installation de fabrication dont certains éléments ont déjà été décrits en détail dans le document mentionné précédemment et auquel on pourra se référer.

C'est ainsi par exemple que cette installation comporte des moyens de production en continu d'une pâte de matière thermoplastique.

Ces moyens sont désignés par la référence générale 1 sur cette figure et comprennent par exemple une machine d'extrusion thermorégulée, désignée par la référence générale 2.

Dans l'exemple de réalisation décrit, cette machine d'extrusion reçoit à une première entrée désignée par la référence générale 3, la matière thermoplastique 4 et à une seconde entrée désignée par la référence générale 5, une charge ou un matériau de renfort désigné par la référence générale 6 et constitué par exemple par des fibres ou autres.

En sortie de cette machine d'extrusion, la pâte passe par exemple dans une filière de sortie désignée par la référence générale 7, pour entrer sous la forme d'un boudin de pâte dans des moyens d'accumulation et de stockage temporaire de cette pâte; ces moyens étant désignés par la référence générale 8 sur cette figure.

Conformément à ce qui a été décrit dans le document mentionné précédemment, ces moyens peuvent comporter une première partie de réservoir, par exemple cylindrique, désignée par la référence générale 9, s'étendant dans le prolongement des moyens de production et une seconde partie de réservoir, par exemple cylindrique, désignée par la référence générale 10, s'étendant latéralement à partir de la première et dans laquelle sont disposés des moyens de compactage/éjection de pâte désignés par la référence générale 11.

Une description détaillée de ces différents moyens pourra être trouvée dans le document mentionné précédemment.

Selon l'invention, la sortie de ces moyens d'accumulation et de stockage temporaire de pâte 8 comprend un distributeur 12 comportant au moins deux sorties et pilotable par exemple par un automate pour délivrer la pâte à l'une ou l'autre de celles-ci.

L'une de ces sorties, par exemple 13, est adaptée pour être accouplée à un orifice de chargement/déchargement de moyens thermorégulés en forme de seringue désignés par la référence générale 15 sur cette figure et l'autre, par exemple 14, est adaptée pour être accouplée de façon permanente à l'orifice de chargement d'un piston 16 d'injection à haute pression de pâte dans un moule de formation de pièce désigné par la référence générale 17, et dont l'orifice de sortie est adapté pour être accouplé de façon permanente à ce moule.

Sur cette figure, l'orifice de chargement du piston 16 est désigné par la référence générale 18 et est donc accouplé de façon permanente à la sortie 14 du distributeur 12.

L'orifice de déchargement du piston 16 est quant à lui désigné par la référence générale 19 et est donc accouplé de façon permanente au moule 17.

L'accouplement du piston au distributeur et au moule peut par exemple être réalisé par vissage de brides, etc...

On notera que ces accouplements peuvent être configurés pour maîtriser l'anisotropie de la pâte en vue d'optimiser les caractéristiques de la pièce.

Le piston 16 est également associé à un groupe d'actionnement à haute pression désigné par la référence générale 20, présentant n'importe quelle structure appropriée et associé à des moyens de pilotage de son fonctionnement à partir de différentes informations, par exemple de pression, de température ou autres de pâte.

Les moyens thermorégulés en forme de seringue 15 sont quant à eux adaptés pour être portés par des moyens de manutention dont une partie 21 est représentée sur cette figure, de manière à être déplaçables entre une première position de chargement de pâte dans laquelle l'orifice de chargement/déchargement de ces moyens thermorégulés en forme de seringue est raccordé à la sortie 13 du distributeur 12 et une seconde position de déchargement de la pâte dans un moule de formation de pièce correspondant, comme cela est décrit dans le document mentionné précédemment.

Dans l'exemple de réalisation représenté, le distributeur 12 se présente sous la forme par exemple d'une vanne à trois voies, une d'entrée et deux de sortie.

Il va de soi bien entendu qu'un autre type de vanne peut être envisagé pour permettre par exemple l'alimentation en pâte de deux pistons d'injection à haute pression alternativement associés chacun à un moule correspondant, au lieu d'un seul.

On notera que ces deux pistons peuvent être pilotés de manière différente l'un de l'autre par exemple en course de déplacement, etc.., pour assurer une alimentation différente des deux moules correspondants, en pâte.

On conçoit alors qu'une telle structure présente un certain nombre d'avantages, notamment au niveau de sa facilité d'adaptation et de l'amélioration des cadences de production de pièces dans la mesure où les moyens thermorégulés 15 permettent d'alimenter un premier moule et le piston 16 d'alimenter un second moule en temps masqué sans provoquer de discontinuité de production de pâte.

## Revendications

1. Installation de fabrication de pièces de structure en matière thermoplastique notamment pour véhicules automobiles, comportant des moyens (1) de production en continu d'une pâte de matière thermoplastique, des moyens (8) d'accumulation et de stockage temporaire de pâte produite et des moyens (15) de prélèvement de pâte dans les moyens d'accumulation et de stockage temporaire et d'introduction de cette pâte prélevée dans un premier moule de formation de pièce, comprenant des moyens thermorégulés en forme de seringue comportant au moins un orifice de chargement/déchargement de pâte, portés par des moyens de manutention (21) et déplaçables entre une première position de chargement de pâte, dans laquelle l'orifice de chargement/déchargement de pâte des moyens en forme de seringue est raccordé à la sortie des moyens (8) d'accumulation et de stockage temporaire de pâte pour permettre le transfert de la pâte de ces moyens d'accumulation et de stockage temporaire dans les moyens en forme de seringue et une seconde position d'introduction de la pâte chargée dans ces moyens, dans le premier moule, **caractérisée en ce que** la sortie des moyens d'accumulation et de stockage (8) comporte un distributeur (12) comportant au moins deux sorties (13,14) et pilotable pour délivrer la pâte à l'une ou l'autre de celles-ci, l'une des sorties (13) étant adaptée pour être accouplée à l'orifice de chargement/déchargement des moyens thermorégulés (15) en forme de seringue et l'autre (14) étant adaptée pour être accouplée de façon permanente à l'orifice de chargement d'un piston (16) d'injection à haute pression de pâte dans un second moule (17) de formation de pièces, dont un orifice de sortie (19) est adapté pour être accouplé de façon permanente à ce second moule.

2. Installation selon la revendication 1, **caractérisée en ce que** le distributeur (12) est formé par une vanne à au moins trois voies.

3. Installation selon la revendication 1, **caractérisée en ce que** le distributeur est pilotable par un automate.

4. Installation selon la revendication 1, **caractérisée en ce que** le distributeur (12) est relié à deux pistons d'injection à haute pression associés chacun à un moule et pilotés de manière différente pour assurer une alimentation différente de chaque moule.

## Patentansprüche

1. Vorrichtung zur Herstellung von Strukturteilen aus thermoplastischem Material, insbesondere für Kraftfahrzeuge, mit Mitteln (1) zur fortlaufenden Herstellung einer Thermoplastmasse, Mitteln (8) zum Anhäufen und vorübergehenden Lagern hergestellter Masse und Mitteln (15) zur Entnahme von Masse aus den Mitteln zum Anhäufen und vorübergehenden Lagern und zum Füllen dieser entnommenen Masse in eine erste Form zum Formen eines Teils, die wärmeregulierte Mittel in Form einer Spritze umfassen, die mindestens eine Einfüll-/Entleerungsöffnung für die Masse aufweisen und von Mitteln zur Handhabung (21) gehalten werden und zwischen einer ersten Einfüllstellung der Masse, in der die Massebefüll-/Entleerungsöffnung der spritzenförmigen Mittel an den Ausgang der Mittel (8) zum Anhäufen und vorübergehenden Lagern der Masse angeschlossen werden, um das Fördern der Masse aus diesen Mitteln (8) zum Anhäufen und vorübergehenden Lagern in die spritzenförmigen Mittel zu ermöglichen, und einer zweiten Stellung verlagerbar sind, in der die erste Gussform mit der in diese Mittel eingebrachten Masse beschickt wird, **dadurch gekennzeichnet, dass** der Ausgang der Mittel (8) zum Anhäufen und vorübergehenden Lagern eine Verteileinrichtung (12) mit mindestens zwei Ausgängen (13, 14) umfasst, die so steuerbar ist, dass sie die Masse zu einem von diesen beiden hin fördert, wobei einer der Ausgänge (13) an die Einfüll-/Entleerungsöffnung der wärmeregulierten, spritzenförmigen Mittel (15) anschließbar ist, und der andere (14) dauerhaft an die Beschicköffnung eines Kolbens (16) zum Hochdruck-Einspritzen von Masse in eine zweite Gussform (17) zum Formen von Teilen anschließbar ist, dessen eine Austrittsöffnung (19) dauerhaft an diese zweite Gussform anschließbar ist.

2. Vorrichtung nach Anspruch 1, **dadurch gekennzeichnet, dass** die Verteileinrichtung (12) von einem Ventil mit mindestens drei Wegen gebildet wird.

3. Vorrichtung nach Anspruch 1, **dadurch gekennzeichnet, dass** die Verteileinrichtung mittels eines Automaten steuerbar ist.

4. Vorrichtung nach Anspruch 1, **dadurch gekennzeichnet, dass** die Verteileinrichtung (12) mit zwei Hochdruck-Einspritzkolben verbunden ist, die jeweils an eine Gussform angeschlossen sind und unterschiedlich zur Sicherstellung einer unterschiedlichen Beschickung jeder Gussform steuerbar ist.

## Claims

1. Plant for manufacturing structural parts in thermoplastic material, particularly for motorised vehicles, consisting of means (1) of continuous production of a thermoplastic pulp, means (8) of storage and temporary stocking of the pulp produced, and means (15) of sampling the pulp in the storage and temporary stocking facilities and introducing this pulp which has been taken into a first component-forming mould, comprising heat regulated means in the form of a syringe with at least one pulp loading/unloading opening, carried by handling means (21) and movable between a first pulp loading position, in which the pulp loading/unloading opening of the syringe-shaped means is connected to the outlet of the pulp storage and temporary stocking means (8) to allow the pulp to be transferred from these storage and temporary stocking means into the syringe-shaped means, and a second position for introducing the pulp loaded into these means, in the first mould, **characterised in that** the outlet of the storage and stocking means (8) has a dispenser (12) with at least two outlets (13, 14) which can be governed to deliver the pulp to either of them, one of the outlets (13) being adapted for coupling to the loading/unloading opening in the syringe-shaped heat controlled means (15) and the other (14) being adapted for coupling permanently to the loading opening of a piston (16) for high pressure injection of pulp into a component-forming second mould (17), an outlet opening (19) of which is adapted to be permanently coupled to this second mould.

2. Plant according to Claim 1, **characterised in that** the dispenser (12) is formed from at least a three-way valve.

3. Plant according to Claim 1, **characterised in that** the dispenser can be governed by an automating device.

4. Plant according to Claim 1, **characterised in that** the dispenser (12) is connected to two high pressure injection pistons, each associated with a mould and governed differently to ensure a different supply for each mould.
